# EUROPEAN PATENT APPLICATION

(11) **EP 4 618 569 A1**
(43) Date of publication of application: **17.09.2025**
(21) Application number: 23895065.3
(22) Date of filing: 24.11.2023
(51) Int. Cl.: H04N 21/8549, H04N 21/462, H04N 21/44

(54) **ELECTRONIC DEVICE WHICH TRANSMITS MEDIA CONTENT, AND OPERATING METHOD THEREOF**

(30) Priority: 25.11.2022 KR 20220160328; 09.12.2022 KR 20220171375
(71) Applicant: Samsung Electronics Co., Ltd., Suwon-si, Gyeonggi-do 16677 (KR)
(72) Inventor: KIM, Hyemin, Suwon-si Gyeonggi-do 16677 (KR); LEE, Seungbum, Suwon-si Gyeonggi-do 16677 (KR); HONG, Seoyeon, Suwon-si Gyeonggi-do 16677 (KR); YEOM, Donghyun, Suwon-si Gyeonggi-do 16677 (KR)
(74) Representative: HGF
(86) International application number: PCT/KR2023/019067
(87) International publication number: WO 2024/112138

(57) **Abstract**

An electronic device (an electronic device (101) in FIG. 1) of the present disclosure may be proposed, the electronic device (the electronic device (101) in FIG. 1) being configured to: discover an external electronic device (102 in FIG. 1) for the electronic device (the electronic device (101) in FIG. 1) to transmit media content; provide capability information of the electronic device (the electronic device (101) in FIG. 1) on the basis of the discovery; request capability information of the external electronic device (102 in FIG. 1); receive the capability information of the external electronic device (102 in FIG. 1) from the external electronic device (102 in FIG. 1) on the basis of the request; generate preview content to be output from the external electronic device (102 in FIG. 1) on the basis of the received capability information of the external electronic device (102 of FIG. 1), the preview content being associated with the media content; and transmit the generated preview content to the external electronic device (102 in FIG. 1).

## Description

### [Technical Field]

Embodiments disclosed herein relate to an electronic device for transmitting media content and a method thereof.

### [Background Art]

Various services and additional functions provided through electronic devices, for example, portable electronic devices such as smart-phones, are gradually increasing. In order to increase the utility value of these electronic devices and satisfy the needs of various users, communication service providers or electronic device manufacturers are competitively developing electronic devices to provide various functions and differentiate themselves from other companies. Accordingly, various functions provided through electronic devices are becoming increasingly sophisticated.

### [Detailed Description of the Invention]

### [Technical Solution]

An electronic device may transmit and receive information to and from an external electronic device through a communication connection. When a communication connection with the electronic device is established, the external electronic device may transmit its own media content to a neighboring electronic device. The electronic device may need to, before transmitting media content selected for transmission, identify whether the external electronic device is to receive the media content. The external electronic device may be provided with a content preview to identify that the external electronic device is to receive the media content as a reception device. The content preview is preview content generated from the media content, and the generation and processing of the preview content may need to be performed according to the situation of a transmission device and a reception device. A neighboring external device may determine the quality, format, and amount of the preview content according to the communication status and support specifications of the external device before accepting the media content. A user of the reception device may identify whether to receive the media content by identifying the preview of the media content from the transmission device.

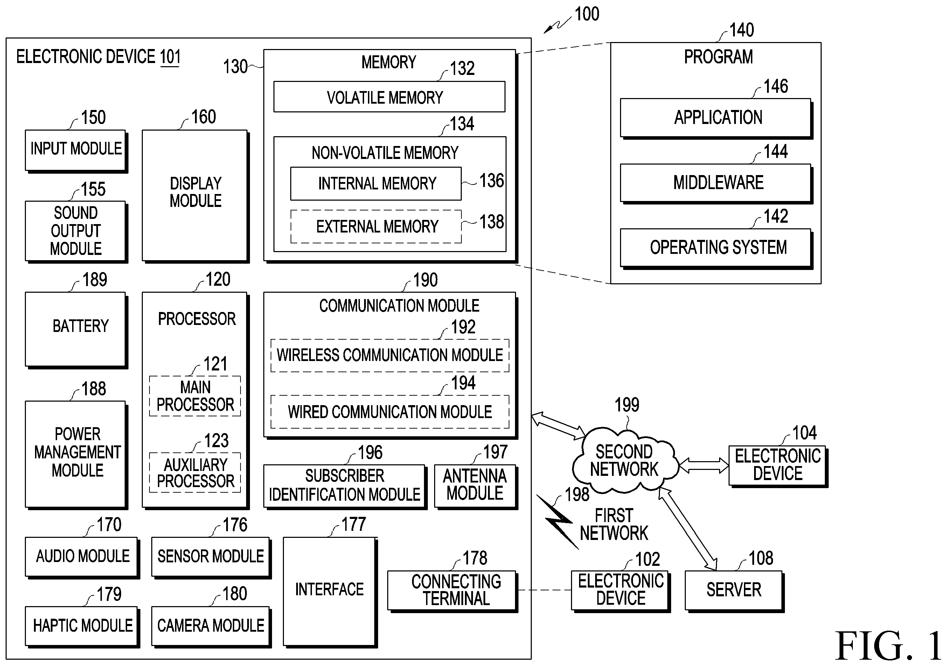

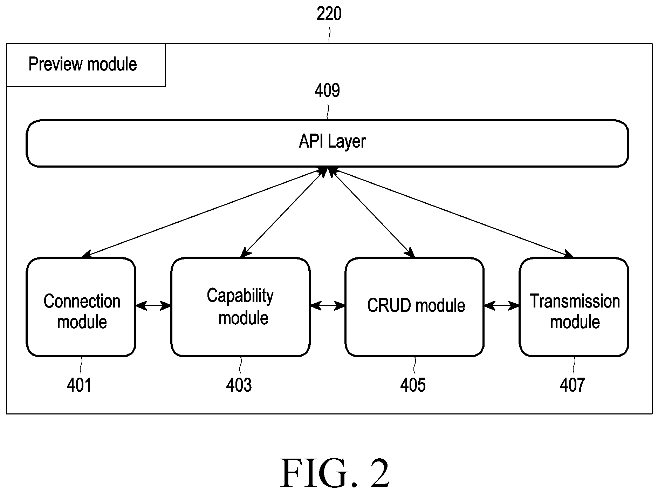

An electronic device (an electronic device 101 of FIG. 1) according to an embodiment of the disclosure may include a communication circuit (a communication module 190 of FIG. 2) and at least one processor (a processor 120 of FIG. 2), wherein the at least one processor is configured to discover an external electronic device (an electronic device 102 of FIG. 1) for transmission of media content from the electronic device (the electronic device 101 of FIG. 1).

An electronic device (an electronic device 101 of FIG. 1) according to an embodiment of the disclosure may be configured to, based on the discovery, provide capability information of the electronic device (the electronic device 101 of FIG. 1) and request capability information of the external electronic device (the electronic device 102 of FIG. 1) via the communication circuit (the communication module 190 of FIG. 2).

An electronic device (an electronic device 101 of FIG. 1) according to an embodiment of the disclosure may be configured to, based on the request, receive capability information of the external electronic device (the electronic device 102 of FIG. 1) from the external electronic device (the electronic device 102 of FIG. 1) via the communication circuit (the communication module 190 of FIG. 2).

An electronic device (an electronic device 101 of FIG. 1) according to an embodiment of the disclosure may be configured to, based on the received capability information of the external electronic device (the electronic device 102 of FIG. 1), generate preview content associated with the media content and to be output from the external electronic device (the electronic device 102 of FIG. 1).

An electronic device (an electronic device 101 of FIG. 1) according to an embodiment of the disclosure may be configured to transmit the generated preview content to the external electronic device (the electronic device 102 of FIG. 1) via the communication circuit (the communication module 190 of FIG. 2).

A method by an electronic device (an electronic device 101 of FIG. 1) according to an embodiment of the disclosure may include discovering an external electronic device (an electronic device 102 of FIG. 1) for transmission of media content from the electronic device (the electronic device 101 of FIG. 1).

A method by an electronic device (an electronic device 101 of FIG. 1) according to an embodiment of the disclosure may include, based on the discovery, providing capability information of the electronic device (the electronic device 101 of FIG. 1) and requesting capability information of the external electronic device (the electronic device 102 of FIG. 1).

A method by an electronic device (an electronic device 101 of FIG. 1) according to an embodiment of the disclosure may include, based on the request, receiving capability information of the external electronic device (the electronic device 102 of FIG. 1) from the external electronic device (the electronic device 102 of FIG. 1).

A method by an electronic device (an electronic device 101 of FIG. 1) according to an embodiment of the disclosure may include, based on the received capability information of the external electronic device (the electronic device 102 of FIG. 1), generating preview content associated with the media content and to be output from the external electronic device (the electronic device 102 of FIG. 1).

A method by an electronic device (an electronic device 101 of FIG. 1) according to an embodiment of the disclosure may include transmitting the generated preview content to the external electronic device (the electronic device 102 of FIG. 1).

### [Brief Description of Drawings]

FIG. 1 is a block diagram of an electronic device in a networked environment according to various embodiments of this document;
FIG. 2 illustrates a block diagram of a preview module in an electronic device according to an embodiment of the disclosure;
FIG. 3 illustrates an operation of an electronic device according to an embodiment of the disclosure;
FIG. 4 illustrates an operation for transmitting preview content from a transmission device to a reception device according to an embodiment of the disclosure;
FIG. 5 illustrates an operation of adjusting the amount of preview content in an electronic device according to an embodiment of the disclosure;
FIG. 6A is an exemplary diagram illustrating a function or operation in which an electronic device according to an embodiment of the disclosure generates preview data of different quality according to the capabilities of each of a plurality of external electronic devices and transmits the generated preview data to each of the plurality of external electronic devices;
FIG. 6B is an exemplary diagram illustrating a function or operation in which an electronic device according to an embodiment of the disclosure generates preview data, based on an electronic device having the lowest specification among the capabilities of each of a plurality of external electronic devices, and transmits the generated preview data to each of the plurality of external electronic devices; and
FIG. 6C illustrates an operation performed according to each capability information for one or more external electronic devices in an electronic device according to an embodiment of the disclosure.

### [Mode for Carrying out the Invention]

Hereinafter, exemplary embodiments of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that t he technical terms used herein are only used to describe specific embodiments, and are not intended to limit the disclosure. In addition, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Furthermore, when the technical terms used herein are wrong technical terms that cannot correctly represent the idea of the disclosure, it should be appreciated that they are replaced by technical terms correctly understood by those skilled in the art. Moreover, the general terms used herein should be interpreted as defined in dictionaries or interpreted in the context of the relevant part, and should not be interpreted to have excessively restricted meanings.

Also, a singular expression used herein may include a plural expression unless they are definitely different in the context. As used herein, such an expression as "comprises" or "include" should not be interpreted to necessarily include all elements or all steps described in the specification, and should be interpreted to be allowed to exclude some of them or further include additional elements or steps.

As used herein, the terms including an ordinal number, such as expressions "a first" and "a second", may be used to described various elements, but the corresponding elements should not be limited by such terms. The above terms are used merely for the purpose of distinguishing one element from other elements. For example, a first element may be termed a second element, and similarly, a second element may be termed a first element without departing from the scope of protection of the disclosure.

It should be understood that when an element is referred to as being "connected" or "coupled" to another element, it may be connected or coupled directly to the other element, or any other element may be interposer between them. Contrarily, in the case where an element is referred to as being "directly connected" or "directly coupled" to any other element, it should be understood that no other element exists therebetween.

Hereinafter, exemplary embodiments according to the disclosure will be described in detail with reference to the accompanying drawings. Regardless of reference signs, the same or like elements are provided with the same or like reference signs in the drawings, and repetitive descriptions thereof will be omitted. In describing the disclosure below, a detailed description of known functions or configurations incorporated herein will be omitted when it is determined that the description may make the subject matter of the disclosure unnecessarily unclear. Furthermore, it should be noted that the accompanying drawings are presented merely to help easy understanding of the disclosure, and are not intended to limit the disclosure. The technical idea of the disclosure should be construed to cover all changes, equivalents, and alternatives, in addition to the accompanying drawings.

Hereinafter, a mobile station will be described with reference to drawings, but the mobile station may also be referred to as an electronic device, a terminal, a mobile equipment (ME), a user equipment (UE), a user terminal (UT), a subscriber station (SS), a wireless device, a handheld device, and an access terminal (AT). The mobile station may also be a device with communication capabilities, such as a cell phone, a personal digital assistant (PDA), a smart-phone, a wireless modem, and a laptop.

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. **In** some embodiments, at least one of the components (e.g., the display device 160 or the camera module 180) may be omitted from the electronic device 101, or one or more other components may be added in the electronic device 101. **In** some embodiments, some of the components may be integrated into a single element. For example, the sensor module 176 (e.g., a fingerprint sensor, an iris sensor, or an illumination sensor) may be embedded and implemented in the display device 160.

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be configured to use lower power than the main processor 121 or be specific to a designated function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by another component (e.g., the processor 120) of the electronic device 101, from the outside (e.g., a user) of the electronic device 101. The input module 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include a touch circuitry adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

FIG. 2 illustrates a block diagram of a preview module in an electronic device according to an embodiment of the disclosure. The functions or operations performed by the preview module according to an embodiment of the disclosure may be performed by the processor 120, and the preview module may be included as a configuration element of the processor 120.

According to an embodiment of the disclosure, the electronic device 101 may include a preview module 220. In the electronic device 101 of the disclosure, the preview module 220 may be configured to connect the electronic device 101 (e.g., a transmission device) with the external electronic device 102 or 104 (e.g., a reception device) to identify the performance of a transmission device 303 and generate an appropriate video preview file accordingly.

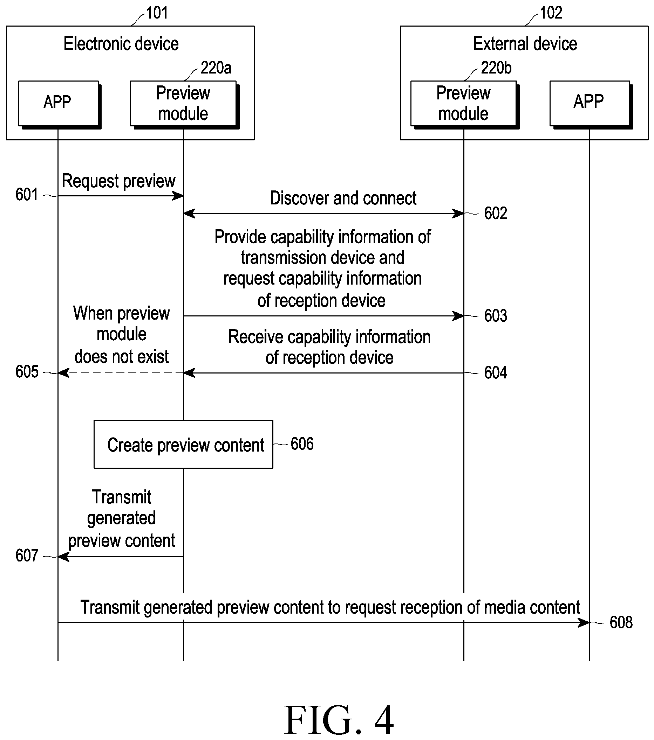

Referring to FIG. 4, the preview module 220 according to an embodiment of the disclosure may include a connection module 401. In an example, the connection module 401 may be configured to perform wireless communication for transmission and reception of preview content between electronic devices. In an example, the connection module 401 may discover and connect an electronic device, based on a wireless communication technology such as Wi-Fi Direct or Wi-Fi Aware. In an example, the electronic device 101 may use UPnP as a method to discover the external electronic device 102 or 104.

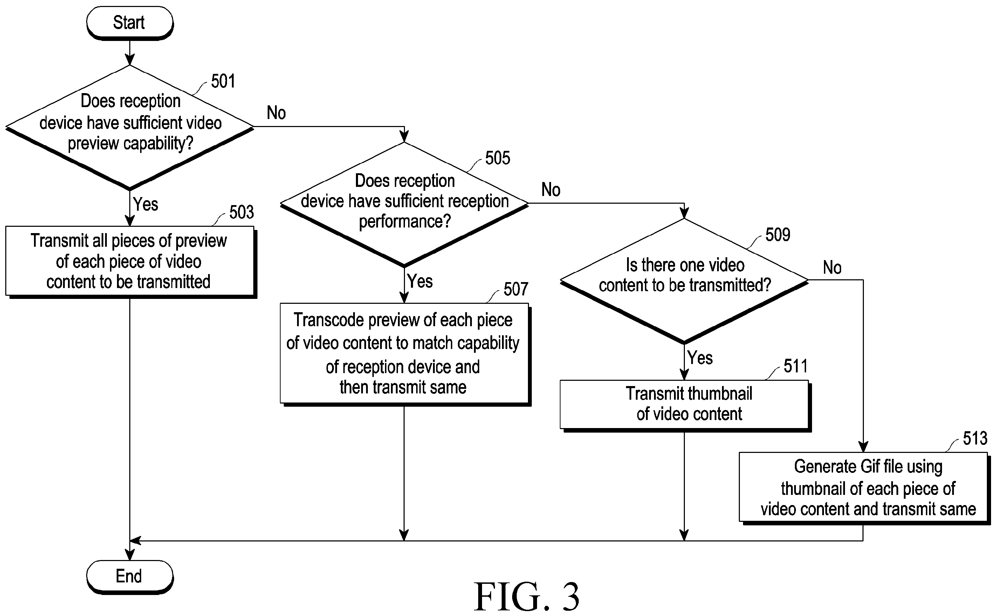

Referring to FIG. 4, the preview module 220 according to an embodiment of the disclosure may include a capability module 403. Capability information and/or preview data according to an embodiment of the disclosure may be stored at least temporarily in memory 130. In an example, capability information may be exchanged between the electronic device 101 and the external electronic device 102 or 104 and stored. In an example, the electronic device 101 may transmit its own unique capability information to the external electronic device 102 or 104 to generate and transmit a content preview to the external electronic device 102 or 104, and may request capability information from the external electronic device 102 or 104 required to generate and transmit the content preview. In an example, the capability information of the electronic device 101 and the external electronic device 102 or 104 may include at least one of remaining storage space of a reception device 301, chipset information, supported codecs, resolution, and frames per second (fps). In an example, the external electronic device 102 or 104 may respond to a request from the electronic device 101, and store, in memory (e.g., memory 130 of FIG. 3) of the electronic device 101, the capability information exchanged between the devices by including its own capability information. In an example, in a first connection between the electronic device 101 and the external electronic device 102 or 104, unique capability information for each of the electronic device 101 and the external electronic device 102 or 104 is exchanged and stored, and thus unnecessary information exchange procedures for subsequent connections may be prevented from being duplicated. In an example, the electronic device 101 may determine preview content to be transmitted, according to the capability of the external electronic device 102 or 104.

Referring to FIG. 2, the preview module 220 according to an embodiment of the disclosure may include a create, read, update, and delete (CRUD) module 405. The CRUD module may be configured to generate and update preview content. Although shown as separate modules of FIG. 4, they are shown as examples for illustrative purposes only and may not be limited to operations performed by a single module. The operations described in the disclosure may be performed by at least one processor. A preview module according to an embodiment of this document may be implemented as a software module executable by at least one processor.

The electronic device 101 according to an example of the disclosure may perform at least one of the operations of generating (creating), reading, storing, updating, or deleting preview content by means of the CRUD module 405.

In an example, in the electronic device 101, with respect to the operation of generating the preview content, in case that the preview content of the video to be transmitted to the external electronic device 102 or 104 is more over spec than the capability of the external electronic device 102 or 104, and at the same time, memory 130 (e.g., a database (video preview DB)) of the preview content does not have a video preview that is substantially the same as the capability of the external electronic device 102 or 104 or that is more under spec than the capability thereof, the video preview content for the video to be transmitted may be generated. The electronic device 101 (e.g., the transmission device) according to an embodiment of the disclosure may generate preview data, based on the state of the external electronic device 102 or 104 (e.g., if the remaining capacity of the external electronic device 102 or 104 is equal to or less than a designated capacity value) and/or the state of the network to which the electronic device 101 is connected.

In an example, the electronic device 101 may generate preview content, based on the capability information of the reception device 303 and the capability information of the transmission device 303, which are received by the electronic device 101. In an example, the electronic device 101 may convert the preview content into an optimized version by considering at least one of a codec, frames per second (fps), and resolution supported by the external electronic device 102 or 104 via the capability information of the external electronic device 102 or 104. However, depending on at least one of the remaining storage space of the external electronic device 102 or 104 and the performance of the chipset, the preview content may be converted to a lower specification than the optimized version.

In an example, in the electronic device 101, the generated preview content may be stored in memory 130 (e.g., a database) for later reuse. For example, when the electronic device 101 generates preview content about the video content to be transmitted, based on information from the external electronic device 102 or 104, the electronic device 101 may use previously generated preview content stored in memory 130 without having to generate the preview content again in the future.

The electronic device 101 according to an example of the disclosure may perform an operation of reading preview content. In an example, before transmitting a video preview, the transmission device 303 may first search a database to see if there is video preview content that meets or falls below the support specification according to the capability information of the external electronic device 102 or 104 before transmitting the video preview. In an example, since the electronic device 101 may transmit the preview content before transmitting the original file of the video preview content, if the specification of the generated preview content is lower than the support specification of the external electronic device 102 or 104, the corresponding preview content may be transmitted.

The electronic device 101 according to an example of the disclosure may update or delete preview content. In an example, when there is preview content stored in a database with respect to video content to be transmitted, if preview content generated with a different specification is generated for the same video content, the electronic device 101 may delete pre-existing preview content. In an example, the electronic device 101 may delete preview content so that multiple pieces of preview content do not exist for the video content to be transmitted, thereby efficiently using storage capacity. In this case, the electronic device 101 may also contribute to speed improvements because the electronic device 101 may not need to perform operations of searching for or selecting preview content when multiple pieces of preview content exist for the same video content.

The electronic device 101 according to an example of the disclosure may transmit preview content. In an example, the electronic device 101 may receive a request from the external electronic device 102 or 104 and/or an application running on the electronic device 101 to transmit video preview content. In this case, the electronic device 101 may transmit the preview content in response to the request. In an example, the electronic device 101 may transmit the preview content to the external electronic device 102 or 104 via a transmission module 407 within the video preview module 220. In an example, the transmission of the original video content to be transmitted by the electronic device 101 and the transmission of the content preview generated for the video to be transmitted may be processed in separate layers. In this case, the electronic device 101 may transmit the preview content without affecting the transmission performance of the original video content.

FIG. 3 illustrates an operation of an electronic device according to an embodiment of the disclosure. The electronic device 101 according to an embodiment of the disclosure may determine preview content that may be transmitted according to the capability of the external electronic device 102 or 104.

In FIG. 3, in operation 501, the electronic device 101 may identify whether the external electronic device 102 or 104 has sufficient capability for the video preview, based on the capability information received from the external electronic device 102 or 104. In an example, the identifying whether the external electronic device 102 or 104 has sufficient capability for video preview may be an operation of identifying whether the electronic device 101 is capable of receiving the generated preview content from the external electronic device 102 or 104 and displaying the same. In an example, the electronic device 101 may identify whether the quality of the generated preview content is maintainable in the specification supported by the external electronic device 102 or 104. In an example, the capability information of the reception device 301 may include at least a part of the information related to codec, fps, and resolution specifications.

In FIG. 3, when it is identified that the external electronic device 102 or 104 has sufficient capability to receive the preview content ("yes" in operation 501), the electronic device 101 may transmit all pieces of preview of each piece of video content to be transmitted, in operation 503. In an example, the electronic device 101 may select one or more pieces of video content to be transmitted, and may transmit one or more pieces of preview content in the selected video content. Here, the electronic device 101 may transmit all pieces of preview content to be transmitted in case that the electronic device 101 identifies, based on the capability information of the external electronic device 102 or 104, that the one or more pieces of preview content are receivable by the external electronic device 102 or 104.

In FIG. 3, when it is identified that the external electronic device 102 or 104 has insufficient capability to receive the preview content ('no" in operation 501), the electronic device 101 may identify whether the external electronic device 102 or 104 has sufficient reception performance in operation 505. For example, the electronic device 101 may identify at least a part of the network communication status, remaining storage space, and chipset information of the external electronic device 102 or 104. Alternatively, the electronic device 101 may identify that the quality of the preview content to be transmitted from the electronic device 101 can be maintained in the external electronic device 102 or 104. For example, it may be identified whether at least one of the specifications of the codec, fps, and/or resolution for the preview content of the electronic device 101 to be compatible on the external electronic device 102 or 104 satisfies a preview quality maintenance condition. For example, the electronic device 101 according to an embodiment of the disclosure may transmit the preview content to the external electronic device 102 or 104 in case that all of the codec, fps, and resolution for the preview content to be compatible on the external electronic device 102 or 104 satisfy the preview quality maintenance condition (e.g., whether the preview content can be output via the external electronic device 102 or 104). In other words, in case that any one of the specifications of the codec, fps, and resolution for the preview content to be compatible on the external electronic device 102 or 104 does not satisfy the quality maintenance condition, the quality of the preview content may be degraded and transmitted to the external electronic device 102 or 104.

In FIG. 3, when it is identified that the reception performance of the external electronic device 102 or 104 is sufficient ("yes" in operation 505), the electronic device 101 may transcode the preview for each piece of video content to match the capability of the external electronic device 102 or 104 and then transmit the transcoded preview in operation 507.

In FIG. 3, when it is identified that the reception performance of the external electronic device 102 or 104 is not sufficient ("no" in operation 505), the electronic device 101 may identify whether there is one piece of video content to be transmitted in operation 509. In FIG. 3, when one piece of video content is to be transmitted ("yes" in operation 509), the electronic device 101 may transmit a thumbnail of video content to the external electronic device 102 or 104 in operation 511. In FIG. 3, when more than one piece of video content is to be transmitted ("no" in operation 509), the electronic device 101 may generate a designated file format (e.g., GIF file) using a thumbnail of each piece of video content and transmit the same in operation 513.

FIG. 4 illustrates operations for transmitting preview content from a transmission device to a reception device according to an embodiment of the disclosure.

In FIG. 4, in operation 601, a preview module 220a according to an example of the disclosure may transmit preview content and receive a request for preview content from an application (or, a service). In an example, the electronic device 101 may select video content to be transmitted by a user and execute a service to share the same with an external electronic device 102 or 104. In an example, when a service or application of the transmission device 101 requests a video preview, the preview module 220a (e.g., the processor 120 of FIG. 1) may request connection to the external electronic device 102 or 104. In an example, the electronic device 101 may receive network information of the external electronic device 102 or 104 and perform a connection request to the external electronic device 102 or 104, based on the network information. In an example, the connection request may be based on a wireless communication technology such as, but not limited to, Wi-Fi Direct or Wi-Fi Aware. For example, UPnP or the like may additionally be used to find a reception device.

In FIG. 4, the electronic device 101 may perform a discovery operation to connect with the external electronic device 102 or 104 in operation 602. In this case, the electronic device 101 may identify whether services and applications associated with reception of preview content exist on the external electronic device 102 or 104.

In FIG. 4, the electronic device 101 may request capability information from the reception device, in order to receive capability information from the external electronic device 102 or 104, in operation 603. Further, the electronic device 101 may notify the external electronic device 102 or 104 of its own capability information.

In FIG. 4, the electronic device 101 may receive capability information from the external electronic device 102 or 104 in operation 604. In an example, when the preview module 220a of the electronic device 101 is connected to the preview module 220b of the external electronic device 102 or 104, they may exchange capability information to identify whether video preview is supported, whether a codec is supported, and/or whether a resolution is supported. In an example, based on the capability information from the external electronic device 102 or 104, the electronic device 101 may reuse stored preview content or generate new preview content to transmit multiple pieces of video preview content corresponding to the requested service or application. In an example, a service or application of the electronic device 101 may provide a preview of video content according to the performance of the external electronic device 102 or 104 by requesting the transmission of content to be transmitted together with preview content from a service or application node of the external electronic device 102 or 104 (indicated by reference numeral 305).

According to an embodiment of the disclosure, the external electronic device 102 or 104 may provide the transmission device 301 with an option for the video preview content to be received. In an example, the external electronic device 102 or 104 may notify the electronic device 101 of options, such as whether reception of the video preview content is possible, the format of the preview content (image format or video format, such as JPEG, GIF, etc.) optimized for reception by the external electronic device 102 or 104, and/or the quality of the preview content. In addition, at a time point when the external electronic device 102 or 104 exchanges capability information for preview content with the electronic device 101, the preview content capability information may be delivered together with information about options for preview content optimized for reception by the external electronic device 102 or 104 and may be used to determine preview content to be transmitted by the transmission device. In an example, the external electronic device 102 or 104 may store the received preview content. Further, the external electronic device 102 or 104 may bundle and store the received preview content in separate albums. In an example, values for the corresponding option (e.g., an option regarding whether preview content is received and/or the quality of the preview content, etc.) may be exchanged together when the transmission/reception device exchanges capability information with each other, so that only the original content to be transmitted may be received without delivery of additional preview content. Alternatively, a user-selectable UI may be provided to enable the preview content to be provided in a format desired by the transmission/reception device.

In FIG. 4, in operation 605, the electronic device 101 may, based on the capability information received from the external electronic device 102 or 104, transmit media content to the external electronic device 102 or 104 without generating preview content in case that the electronic device 101 is unable to display the preview content, such as the case in which the external electronic device 102 or 104 does not have the preview module 220, or in which the capability request from the external electronic device 102 or 104 exceeds a timeout. Alternatively, the electronic device 101 may not provide a preview for video content among the selected content, or may only provide a preview for image content.

In FIG. 4, the electronic device 101 may generate preview content in the preview module 220a in operation 606. For example, the generation of the preview content may comply with the description of FIGS. 4 and 3.

In FIG. 4, in operation 607, the preview content generated by the preview module 220a of the electronic device 101 may be delivered to the application node for transmission to the external electronic device 102 or 104, or the preview content may be transmitted from the preview module of the electronic device 101 to the preview module of the external electronic device 102 or 104 and the resulting value may be delivered to the application node.

In FIG. 4, in operation 608, the electronic device 101 may transmit the generated preview content to the external electronic device 102 or 104 to request reception of the media content (indicated by reference numeral 305).

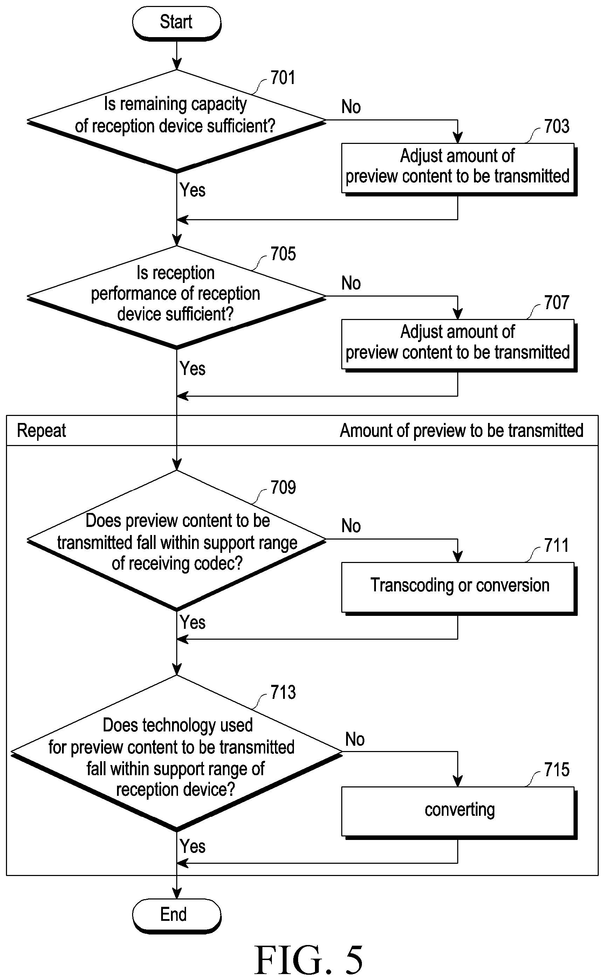

FIG. 5 illustrates an operation of adjusting the amount of preview content in an electronic device according to an embodiment of the disclosure.

According to an embodiment of the disclosure, the electronic device 101 includes a preview module 220, and the preview module 220 may be executed at the request of a service or application of the electronic device 101 that transmits media content. In an example, the network information of the external electronic device 102 or 104 delivered together at the request of the electronic device 101 may be used to connect the preview modules 220a and 220b of the electronic device 101 and the external electronic device 102 or 104, respectively. For example, the electronic device 101 may identify whether the capability information of the external electronic device 102 or 104 is stored in a database, and if so, the electronic device 101 may not request the capability information. In an example, the capability information exchanged between the transmission device 301 and the external electronic device 102 or 104 may include the range of support for the codec, chipset information, whether HDR10+ is supported, etc. In an example, each of the transmission device 301 and the external electronic device 102 or 104 may store the capability information of the other device in an internal database so that they do not perform the same operation repeatedly after the initial connection.

Referring to FIG. 5, the electronic device 101 may identify whether the remaining capacity of the external electronic device 102 or 104 is sufficient in operation 701. For example, the electronic device 101 may identify whether the external electronic device 102 or 104 has free capacity to display the preview content to be transmitted to the external electronic device 102 or 104.

In FIG. 5, when the remaining capacity of the external electronic device 102 or 104 is insufficient ("no" in operation 701), the electronic device 101 may adjust the amount of preview content to be transmitted in operation 703. For example, when there is more than one piece of video preview content, the electronic device 101 may adjust one piece of video preview content to be transmitted. In this case, the electronic device 101 may adjust the amount of preview content to be transmitted by selecting an appropriate preview content from among multiple pieces of video preview content according to the remaining capacity of the external electronic device 102 or 104.

In FIG. 5, when the remaining capacity of the external electronic device 102 or 104 is sufficient ("yes" in operation 701) or the amount of preview content to be transmitted is adjusted although the remaining capacity is not sufficient (operation 703), the electronic device 101 may identify whether the reception performance of the external electronic device 102 or 104 is sufficient, based on the state of a network to which the transmission/reception device is connected, chipset information of the reception device, etc., in operation 705.

In FIG. 5, when it is identified that the reception performance of the external electronic device 102 or 104 is insufficient, the electronic device 101 may adjust the amount of preview content to be transmitted in operation 707. In an example, the receivable amount of preview content may be adjusted according to the reception performance, based on the capability information of each of the electronic device 101 and the external electronic device 102 or 104. In addition, the electronic device 101 may adjust the amount of preview content to be transmitted, according to the network communication status of the external electronic device 102 or 104.

In FIG. 5, when it is identified that the reception performance of the external electronic device 102 or 104 is sufficient ("yes" in operation 705) or when the amount of preview content to be transmitted is adjusted ("yes" in operation 707), the electronic device 101 may identify whether the preview content to be transmitted falls within the range of support for a receiving codec in operation 709. For example, the electronic device 101 may identify whether the codec of the preview content generated by the electronic device 101 is a codec supported by the external electronic device 102 or 104, based on the capability information of each of the electronic device 101 and the external electronic device 102 or 104.

In FIG. 5, when the codec of the preview content generated by the electronic device 101 is not a codec supported by the external electronic device 102 or 104 ("no" in operation 709), the electronic device 101 may process the preview content by performing a transcoding or conversion operation on the preview content in operation 711.

In FIG. 5, when the preview content to be transmitted falls within the range of support for a receiving codec of the external electronic device 102 or 104 ("yes" in operation 709) or when the preview content has been processed to fall within the codec support range of the external electronic device 102 or 104 ("yes" in operation 711), the electronic device 101 may identify whether the technology used for the preview content to be transmitted is within the codec support range of the external electronic device 102 or 104 in operation 713. In an example, the electronic device 101 may, based on capability information of each of the electronic device 101 and the external electronic device 102 or 104, identify whether the technology used by the electronic device 101 in the process of generating the preview content is within the range supported by the external electronic device 102 or 104.

In FIG. 5, in operation 715, the electronic device 101 may perform an operation of converting the preview content to process the same into preview content within the range supported by the external electronic device 102 or 104.

According to the operation of the electronic device 101 in accordance with an embodiment of the disclosure, the electronic device 101 may identify capability information of the external electronic device 102 or 104, and generate and transmit preview content based on the capability information. In other words, by incrementally and/or dynamically generating and processing the preview content, the electronic device 101 may provide a preview so that the external electronic device 102 or 104 may identify information about the content to be received by the external electronic device 102 or 104 in operation before transmitting the original content, regardless of the performance of the electronic device 101 or the unique characteristics of the content.

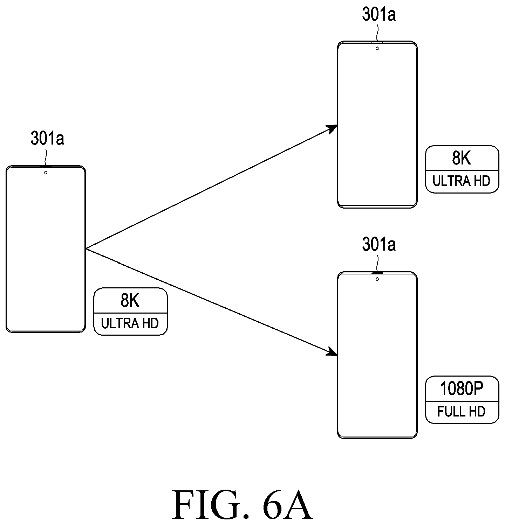

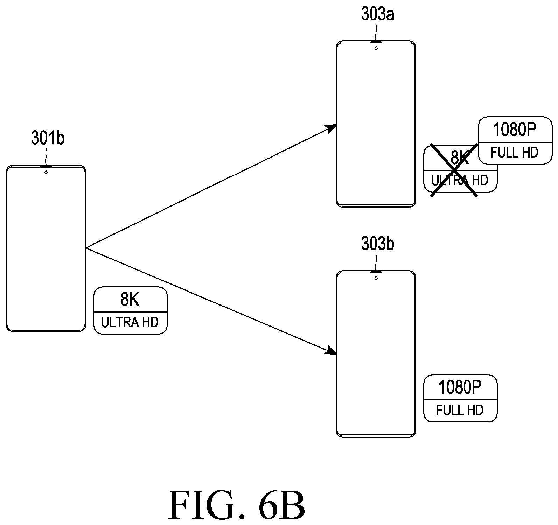

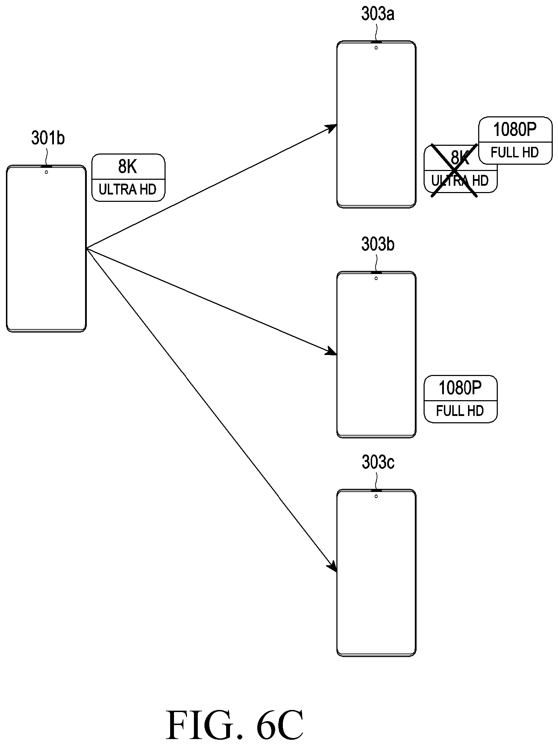

Referring to FIGS. 6A, 6B, and 6C, it is illustrated that in an electronic device 101 in accordance with an embodiment of the disclosure, when connected to a plurality of external electronic devices 102 and 104, the resolutions supported by each of the reception devices are different. It is also illustrated that for each of the plurality of reception devices, the video preview content may be omitted or provided in an image format (e.g., jpeg, gif) depending on storage space, chipset information, CPU usage, and/or options configured by the reception device.

FIG. 6A is an exemplary diagram illustrating a function or operation in which an electronic device according to an embodiment of the disclosure generates preview data of different quality based on capabilities of each of the plurality of external electronic devices and transmits the generated preview data to each of the plurality of external electronic devices. FIG. 6B is an exemplary diagram illustrating a function or operation in which an electronic device according to an embodiment of the disclosure generates preview data based on an electronic device having the lowest specification among the capabilities of each of the plurality of external electronic devices, and transmits the generated preview data to each of the plurality of external electronic devices. FIG. 6C illustrates an operation performed according to each capability information for one or more external electronic devices in an electronic device according to an embodiment of the disclosure.

In an example, a transmission device 301a is an electronic device 101 capable of supporting ULTRA HD of 8K, and the transmission device 301a may share video content with a first reception device 301a and a second reception device 301b. Here, the first reception device 301a and the second reception device 301b may be a device supporting ULTRA HD of 8K and a device supporting FULL HD of 1080P, respectively. For example, the quality of the preview content may be differentiated based on the performance of the plurality of reception devices 301a and 301b having different specifications. In an example, a scenario of sharing a video in a situation where the transmission device and the reception device is 1:N, such as the transmission device 301a versus the reception devices 301a and 301b, may be as follows. For example, referring to FIG. 6A, in the case of transmitting different video preview content to the N reception devices, respectively, the capability information of each of the N reception devices may be identified and preview content suitable for each of the N reception devices may be transmitted. However, in order to minimize the inefficiency of generating N pieces of video preview content, the transmission device may identify the capability information of the N reception devices, generate one video preview content based on the reception device having the lowest specification, and transmit the one video preview in batches. Referring to FIG. 6B, a relatively high-specification terminal among N reception devices may receive video preview content of 8K quality in a 1:1 transmission scenario, but may transmit video preview content of FULL HD specification, based on the lowest specification in a 1:N transmission scenario. For example, in FIG. 6B, a transmission device 301b may produce video preview content of 8K quality and receive capability information from each of a first reception device 303a and a second reception device 303b. In this case, the transmission device 301b may generate video preview content of FULL HD specification, according to the second reception device 303b providing a relatively lower specification among the plurality of reception devices 303a and 303b. The transmission device 301b may transmit the video preview content of FULL HD specification to the first reception device 303a and the second reception device 303b. The electronic device 101 (e.g., the transmission device) according to an embodiment of the disclosure may identify whether the external electronic device 102 or 104 (e.g., the reception device) supports HDR. The electronic device 101 according to an embodiment of the disclosure may, in case that the external electronic device 102 or 104 is identified as having substantially the same HDR capability as the HDR capability of the electronic device 101, transmit preview content based on the HDR capability of the electronic device 101 to the external electronic device 102 or 104. The electronic device 101 according to an embodiment of the disclosure may, in case that the external electronic device 102 or 104 is identified as having a capability that is not substantially the same as (e.g., lower than) the HDR capability of the electronic device 101, generate preview content based on the HDR capability of the external electronic device 101 and transmit the generated preview content to the external electronic device 102 or 104. To this end, the electronic device 101 according to an embodiment of the disclosure may perform tone mapping, perform gamut mapping, or perform format conversion on the preview content generated according to the HDR capability of the electronic device 101. Gamut mapping according to an embodiment of the disclosure may refer to a function or operation of reducing the color gamut of content from DCI-P3 area content (wide-range color expression capability) to rec.709 (narrow-range color expression capability). Format conversion according to an embodiment of the disclosure may refer to a function or operation of converting HDR10+ to HDR10, or converting HDR10 to HLG. The electronic device 101 according to an embodiment of the disclosure may, when the external electronic device 102 or 104 only supports SDR, also convert HDR content to SDR content and transmit the SDR content to the external electronic device 102 or 104.

FIG. 6C illustrates an operation performed according to each capability information for one or more external electronic devices in an electronic device according to an embodiment of the disclosure.

In an example, when a transmission device and a reception device are in a 1:N relationship, the preview quality may be unified according to the performance of the reception devices when sharing video content. In an example, a transmission device 301b may request capability information for preview content from N reception devices. For example, the transmission device 301b may request capability information for the preview content from each of the N reception devices and receive all N responses, which may take a considerable amount of time. Therefore, the transmission device 301b may arrange a time (timer) long enough to have no influence on the transmission performance of the original media content to be transmitted, and may not support preview content for the reception devices from which no respond is received within the arranged time. Referring to FIG. 6C, in case that one of the three reception devices 301a, 301b, and 303c fails to receive a response to the request for capability information within a predetermined time, the transmission device 301b may determine that it is not possible to identify the capability for the reception device (e.g., 303c) and may not provide the video preview content.

According to an embodiment of the disclosure, the electronic device 101 and the external electronic device 102 or 104 may exchange capability information with each other. In an example, the electronic device 101 may provide optimized video preview content to the external electronic device 102 or 104. In an example, the electronic device 101 may provide the preview content to the external electronic device 102 or 104 so that the external electronic device 102 or 104 may identify information about the video content to be transmitted in operation prior to accepting or transmitting a file from the external electronic device 102 or 104.

An electronic device (an electronic device 101 of FIG. 1) according to an embodiment of the disclosure may include a communication circuit (a communication module 190 of FIG. 1), and at least one processor (120 or 220 of FIG. 2), wherein the at least one processor is configured to discover an external electronic device (102 of FIG. 1) for transmission of media content from the electronic device (the electronic device 101 of FIG. 1).

An electronic device (an electronic device 101 of FIG. 1) according to an embodiment of the disclosure may be configured to provide capability information of the electronic device (the electronic device 101 of FIG. 1) via the communication circuit (190 of FIG. 2) based on the discovery, and to request capability information of the external electronic device (102 of FIG. 1).

An electronic device (an electronic device 101 of FIG. 1) according to an embodiment of the disclosure may be configured to, based on the request, receive capability information of the external electronic device (102 of FIG. 1) from the external electronic device (102 of FIG. 1) via the communication circuit (190 of FIG. 2).

An electronic device (an electronic device 101 of FIG. 1) according to an embodiment of the disclosure may be configured to generate preview content associated with the media content and to be output from the external electronic device (102 of FIG. 1), based on the received capability information of the external electronic device (102 of FIG. 1).

An electronic device (an electronic device 101 of FIG. 1) according to an embodiment of the disclosure may be configured to transmit the generated preview content to the external electronic device (the electronic device 102 of FIG. 1) via the communication circuit (190 of FIG. 2).

An electronic device (an electronic device 101 of FIG. 1) according to an embodiment of the disclosure may be further configured to identify whether the generated preview content exists for the media content.

An electronic device (an electronic device 101 of FIG. 1) according to an embodiment of the disclosure may be further configured to, in case that the generated preview content exists for the media content, process the generated preview content based on the capability information of the external electronic device (102 of FIG. 1).

In an electronic device (an electronic device 101 of FIG. 1) according to an embodiment of the disclosure, the capability information received from the external electronic device (102 of FIG. 1) may include information related to at least one of a codec, frames per second (FPS), resolution, chipset, storage capacity, and network communication, of the external electronic device (102 of FIG. 1).

In an electronic device (an electronic device 101 of FIG. 1) according to an embodiment of the disclosure, the capability information received from the external electronic device (102 of FIG. 1) may include information related to the quality of the preview content that the external electronic device (102 of FIG. 1) is capable of receiving.

An electronic device (an electronic device 101 of FIG. 1) according to an embodiment of the disclosure may be configured to adjust the amount of the preview content to be transmitted to the external electronic device (102 of FIG. 1), based on the received capability information of the external electronic device (102 of FIG. 1).

In an electronic device (an electronic device 101 of FIG. 1) according to an embodiment of the disclosure, the media content includes video content and image content, and the electronic device may be further configured to reduce the amount of the preview content for the video content to be transmitted to the external electronic device (102 of FIG. 1) in case that the remaining capacity of the external electronic device (102 of FIG. 1) is equal to or less than a predetermined amount of capacity, or that the reception performance of the external electronic device (102 of FIG. 1) is not capable of maintaining the quality of the generated preview content.

An electronic device (an electronic device 101 of FIG. 1) according to an embodiment of the disclosure may be configured to, in case that the amount of preview content to be transmitted is adjusted, identify whether the preview content to be transmitted is capable of maintaining a predetermined quality on the external electronic device (102 of FIG. 1).

An electronic device (an electronic device 101 of FIG. 1) according to an embodiment of the disclosure may be configured to, in case that the preview content to be transmitted is capable of maintaining the predetermined quality on the external electronic device (102 of FIG. 1), transmit the preview content to be transmitted to the external electronic device (102 of FIG. 1) via the communication circuit.

An electronic device (an electronic device 101 of FIG. 1) according to an embodiment of the disclosure may be further configured to, in case that the preview content to be transmitted is unable to maintain the predetermined quality on the external electronic device (102 of FIG. 1), process the preview content to be transmitted, in a format supportable by the external electronic device (102 of FIG. 1).

In an electronic device (an electronic device 101 of FIG. 1) according to an embodiment of the disclosure, the external electronic device (102 of FIG. 1) includes a plurality of external electronic devices 102 and 104, and the at least one processor may be configured to receive capability information for each of the plurality of reception devices (303a, 303b, and 303c of FIG. 6C).

An electronic device (an electronic device 101 of FIG. 1) according to an embodiment of the disclosure may be configured to identify the media content to be transmitted to the plurality of reception devices (303a, 303b, and 303c of FIG. 6C).

An electronic device (an electronic device 101 of FIG. 1) according to an embodiment of the disclosure may be configured to, in case that the media content to be transmitted is the same, produce the preview content based on a reception device having the lowest specification among the plurality of reception devices (303a, 303b, and 303c of FIG. 6C).

An electronic device (an electronic device 101 of FIG. 1) according to an embodiment of the disclosure may be configured to receive the capability information for each of the plurality of reception devices (303a, 303b, and 303c of FIG. 6C) within a predetermined time, and not to transmit the preview content to the corresponding reception device in case that the capability information is received after the predetermined time.

A method by an electronic device (an electronic device 101 of FIG. 1) according to an embodiment of the disclosure may include discovering an external electronic device (102 of FIG. 1) for transmission of media content from the electronic device (the electronic device 101 of FIG. 1).

A method by an electronic device (an electronic device 101 of FIG. 1) according to an embodiment of the disclosure may include, based on the discovery, providing capability information of the electronic device (the electronic device 101 of FIG. 1) and requesting capability information of an external electronic device (an electronic device 102 of FIG. 1).

A method by an electronic device (an electronic device 101 of FIG. 1) according to an embodiment of the disclosure may include, based on the request, receiving capability information of the external electronic device (102 of FIG. 1) from the external electronic device (102 of FIG. 1).

A method by an electronic device (an electronic device 101 of FIG. 1) according to an embodiment of the disclosure may include, based on the received capability information of an external electronic device (102 of FIG. 1), generating preview content associated with the media content and to be output from the external electronic device (102 of FIG. 1).

A method by an electronic device (an electronic device 101 of FIG. 1) according to an embodiment of the disclosure may include transmitting the generated preview content to the external electronic device (102 of FIG. 1).

A method by an electronic device (an electronic device 101 of FIG. 1) according to an embodiment of the disclosure may further include identifying whether the generated preview content exists for the media content.

A method by an electronic device (an electronic device 101 of FIG. 1) according to an embodiment of the disclosure may further include, in case that the generated preview content exists for the media content, processing the generated preview content for the media content, based on the capability information of the external electronic device (102 of FIG. 1).

A method by an electronic device (an electronic device 101 of FIG. 1) according to an embodiment of the disclosure, the capability information received from the external electronic device (102 of FIG. 1) may include at least one of information related to a codec, frames per second (FPS), resolution, chipset, storage capacity, and network communication, of the external electronic device (102 of FIG. 1).

In a method by an electronic device (an electronic device 101 of FIG. 1) according to an embodiment of the disclosure, the capability information received from the external electronic device (102 of FIG. 1) may include information related to the quality of the preview content that the external electronic device (102 of FIG. 1) is capable of receiving.

A method by an electronic device (an electronic device 101 of FIG. 1) according to an embodiment of the disclosure may include, based on the received capability information of the external electronic device (102 of FIG. 1), adjusting the amount of the preview content to be transmitted to the external electronic device (102 of FIG. 1).

In a method by an electronic device (an electronic device 101 of FIG. 1) according to an embodiment of the disclosure, the media content includes video content and image content, and the method may further include reducing the amount of the preview content for the video content to be transmitted to the external electronic device (102 of FIG. 1) in case that the remaining capacity of the external electronic device (102 of FIG. 1) is equal to or less than a predetermined amount of capacity, or that the reception performance of the external electronic device (102 of FIG. 1) is not capable of maintaining the quality of the generated preview content.

A method by an electronic device (an electronic device 101 of FIG. 1) according to an embodiment of the disclosure may include, in case that the amount of preview content to be transmitted is adjusted, identifying whether the preview content to be transmitted is capable of maintaining a predetermined quality on the external electronic device (102 of FIG. 1).

A method by an electronic device (an electronic device 101 of FIG. 1) according to an embodiment of the disclosure may include, in case that the preview content to be transmitted is capable of maintaining the predetermined quality, transmitting the preview content to be transmitted to the external electronic device (102 of FIG. 1) via the communication circuit.

A method by an electronic device (an electronic device 101 of FIG. 1) according to an embodiment of the disclosure may further include, in case that the preview content to be transmitted is unable to maintain the predetermined quality, processing the preview content to be transmitted, in a format supportable by the external electronic device (102 of FIG. 1).

In a method by an electronic device (an electronic device 101 of FIG. 1) according to an embodiment of the disclosure, the external electronic device (102 of FIG. 1) includes a plurality of external electronic devices 102 and 104, and the method may further include receiving capability information for each of the plurality of reception devices (303a, 303b, and 303c of FIG. 6C).

A method by an electronic device (an electronic device 101 of FIG. 1) according to an embodiment of the disclosure may further include identifying the media content to be transmitted to the plurality of reception devices (303a, 303b, and 303c of FIG. 6C).

A method by an electronic device (an electronic device 101 of FIG. 1) according to an embodiment of the disclosure may further include, in case that the media content to be transmitted is the same, producing the preview content based on a reception device having the lowest specification among the received capabilities of the plurality of external electronic devices (303a, 303b, and 303c of FIG. 6C).

In a method by an electronic device (an electronic device 101 of FIG. 1) according to an embodiment of the disclosure, in relation to an operation of receiving the capability information for each of the plurality of reception devices (303a, 303b, and 303c of FIG. 6C) within a predetermined time, the preview content may not be transmitted to the corresponding reception device in case that the capability information is received after the predetermined time.

## Claims

1. An electronic device (an electronic device (101) of FIG. 1) comprising:
a communication circuit (a communication module (190) of FIG. 1); and
at least one processor (a processor 120 of FIG. 1),
wherein the at least one processor is configured to:
transmit, via the communication circuit (the communication module (190) of FIG. 1), capability information of the electronic device (the electronic device (101) of FIG. 1) and a request for transmitting capability information of an external electronic device (an external electronic device (102, 104) of FIG. 1) to the external electronic device (the external electronic device (102, 104) of FIG. 1);
obtain, via the communication circuit (190 of FIG. 2), the capability information of the external electronic device (the external electronic device (102, 104) of FIG. 1) from the external electronic device (the external electronic device (102, 104) of FIG. 1);
based on the obtained capability information of the external electronic device (the external electronic device (102, 104) of FIG. 1), generate preview content to be output from the external electronic device (the external electronic device (102) of FIG. 1); and
transmit, via the communication circuit (the communication module (190) of FIG. 1), the generated preview content to the external electronic device (the external electronic device (102, 104) of FIG. 1).

2. The electronic device of claim 1, wherein the at least one processor is further configured to:
search for an external electronic device for transmission of media content from the electronic device; and
identify whether the generated preview content exists for the media content.

3. The electronic device of claims 1 to 2, wherein the at least one processor is further configured to, in case that the generated preview content exists for the media content, process the generated preview content based on the capability information of the external electronic device (102 of FIG. 1).

4. The electronic device of claims 1 to 3, wherein the capability information received from the external electronic device (102 of FIG. 1) comprises information related to at least one of a codec, frames per second (FPS), resolution, chipset, storage capacity, and network communication, of the external electronic device (102 of FIG. 1).

5. The electronic device of claims 1 to 4, wherein the at least one processor is configured such that the capability information received from the external electronic device (102 of FIG. 1) comprises information related to quality of the preview content that the external electronic device (102 of FIG. 1) is capable of receiving.

6. The electronic device of claims 1 to 5, wherein the at least one processor is further configured to, based on the received capability information of the external electronic device (102 of FIG. 1), adjust the amount of the preview content to be transmitted to the external electronic device (102 of FIG. 1).

7. The electronic device of claims 1 to 6, wherein the media content comprises video content and image content, and
wherein the at least one processor is further configured to reduce the amount of the preview content for the video content to be transmitted to the external electronic device (102 of FIG. 1) in case that remaining capacity of the external electronic device (102 of FIG. 1) is equal to or less than a predetermined amount of capacity, or that reception performance of the external electronic device (102 of FIG. 1) is not capable of maintaining the quality of the generated preview content.

8. The electronic device of claims 1 to 7, wherein the at least one processor is further configured to:
in case that the amount of preview content to be transmitted is adjusted, identify whether the preview content to be transmitted is capable of maintaining a predetermined quality on the external electronic device (102 of FIG. 1);
in case that the predetermined quality is able to be maintained, transmit the preview content to be transmitted to the external electronic device (102 of FIG. 1) via the communication circuit; and
in case that the predetermined quality is unable to be maintained, process the preview content to be transmitted in a format supportable by the external electronic device (102 of FIG. 1).

9. The electronic device of claims 1 to 8, wherein the external electronic device (102 of FIG. 1) comprises a plurality of external electronic devices (102 and 104), and wherein the at least one processor is configured to:
receive capability information for each of the plurality of reception devices (303a, 303b, and 303c of FIG. 6C);
identify the media content to be transmitted to the plurality of reception devices (303a, 303b, and 303c of FIG. 6C); and
in case that the media content to be transmitted is the same, produce the preview content based on a reception device having the lowest specification among the plurality of reception devices (303a, 303b, and 303c of FIG. 6C).

10. The electronic device of claims 1 to 9, wherein the at least one processor is configured to receive the capability information for each of the plurality of reception devices (303a, 303b, and 303c of FIG. 6C) within a predetermined time, and not transmit the preview content to corresponding reception device in case that the capability information is received after the predetermined time.

11. A method by an electronic device (an electronic device (101) of FIG. 1), the method comprising:
transmitting, via a communication circuit (a communication module (190) of FIG. 1) of the electronic device, capability information of the electronic device (the electronic device (101) of FIG. 1) and a request for transmitting capability information of an external electronic device (an external electronic device (102, 104) of FIG. 1) to the external electronic device (the external electronic device (102, 104) of FIG. 1);
obtaining, via the communication circuit (190 of FIG. 2), the capability information of the external electronic device (the external electronic device (102, 104) of FIG. 1) from the external electronic device (the external electronic device (102, 104) of FIG. 1);
based on the acquired capability information of the external electronic device (the external electronic device (102, 104) of FIG. 1), generating preview content to be output from the external electronic device (the external electronic device (102) of FIG. 1); and
transmitting, via the communication circuit (the communication module (190) of FIG. 1), the generated preview content to the external electronic device (the external electronic device (102, 104) of FIG. 1).

12. The method of claim 11, further comprising identifying whether the generated preview content exists for the media content.

13. The method of claim 11 to 12, further comprising, in case that the generated preview content exists for the media content, processing the generated preview content based on the capability information of the external electronic device (102 of FIG. 1).

14. The method of claims 11 to 13, wherein the capability information received from the external electronic device (102 of FIG. 1) comprises information related to at least one of a codec, frames per second (FPS), resolution, chipset, storage capacity, and network communication, of the external electronic device (102 of FIG. 1).

15. The method of claims 11 to 14, wherein the capability information received from the external electronic device (102 of FIG. 1) comprises information related to quality of the preview content that the external electronic device (102 of FIG. 1) is capable of receiving.
